Europäisches Patentamt

European Patent Office

Office européen des brevets

(11) Veröffentlichungsnummer: **0 212 438**
**A2**

(12) **EUROPÄISCHE PATENTANMELDUNG**

(21) Anmeldenummer: 86110843.9

(22) Anmeldetag: 05.08.86

(51) Int. Cl.⁴: **G02B 5/18**

(30) Priorität: 13.08.85 DE 3528947

(43) Veröffentlichungstag der Anmeldung:
04.03.87 Patentblatt 87/10

(84) Benannte Vertragsstaaten:
AT CH DE FR GB LI NL SE

(71) Anmelder: **Firma Carl Zeiss**

D-7920 Heidenheim (Brenz)(DE)
Anmelder: **CARL-ZEISS-STIFTUNG trading as CARL ZEISS**

D-7920 Heidenheim (Brenz)(DE)

(72) Erfinder: **Mächler, Meinrad**
**Sulzgasse 2**
**D-7090 Ellwangen(DE)**
Erfinder: **Sachse, Richard**
**Ulmenweg 21**
**D-7923 Königsbronn(DE)**
Erfinder: **Bittner, Reinhold**
**Friedensstrasse 6**
**D-7074 Mögglingen(DE)**
Erfinder: **Schiemmer, Harry, Dr.**
**Einsteinstrasse 16**
**D-7082 Oberkochen(DE)**

(54) **Reflexionsbeugungsgitter mit hohem Wirkungsgrad.**

(57) Das unverspiegelte Gitter sitzt auf einem optisch transparenten Körper und wird mit Strahlung durch diesen transparenten Körper beaufschlagt, die mit einem Winkel auf die Flanken der Gitterfurchen trifft, der größer ist als der Grenzwinkel der Totalreflexion.

EP 0 212 438 A2

Fig.2

### Reflexionsbeugungsgitter mit hohem Wirkungsgrad

Die vorliegende Erfindung betrifft ein Reflexionsbeugungsgitter, bei dem die Gitterteilung mit ihrer reflektierenden Seite auf eine Fläche eines optisch transparenten Körpers aufgebracht ist.

Reflexionsbeugungsgitter sind seit langer Zeit bekannt. Zur Verbesserung ihres Wirkungsgrades, d.h. ihres Reflexionsvermögens in einem vorgesehenen Wellenlängenbereich (meistens für die 1. Ordnung), gibt man den Furchen ein bestimmtes Profil, einen sog. Blaze. Außerdem erhalten die Gitter meist eine Metallverspiegelung (Al, Au, Pt) auf ihrer Frontfläche, die ggf. durch eine MgF$_2$-Schicht geschützt wird. Das Reflexionsvermögen der bekannten Gitter liegt trotz Blaze und trotz Verspiegelung deutlich unter 100%, oft beträchtlich darunter. Für viele Anwendungen, bei denen es auf möglichst große Intensität ankommt, ist dies ein großer Nachteil.

Ein Verfahren zur Herstellung von Beugungsgittern mit unsymmetrischem Furchenprofil ist z.B. aus der DE-PS 2 118 674 bekannt. Aus der US-PS 4 475 792 ist ferner ein Beugungsgitter bekannt, das auf der reflektierenden Oberfläche eines optischen Prismas sitzt. Durch diese Anordnung wird das Auflösungsvermögen um den Faktor n erhöht, wobei n die Brechzahl des optischen Prismas ist. Nachteilig ist jedoch, daß das Reflexionsvermögen dieses Gitters -auch wenn es verspiegelt ist -geringer ist als bei den üblichen Oberflächengittern, da der Brechzahlunterschied zwischen Metall und dem optischen Material des Prismas kleiner ist als der zwischen Metall und Luft. Dadurch hat dieses bekannte Gitter einen noch schlechteren Wirkungsgrad als die normalen Reflexionsbeugungsgitter.

Der vorliegenden Erfindung liegt die Aufgabe zugrunde, bei einem Reflexionsbeugungsgitter ein möglichst hohen Wirkungsgrad zu erreichen.

Die gestellte Aufgabe wird bei einem Reflexionsbeugungsgitter nach dem Oberbegriff des Anspruches 1 dadurch gelöst, daß der Winkel, unter dem das Licht auf die Flanken der Gitterfurchen auftrifft, größer ist als der Grenzwinkel der Totalreflexion.

Der Grenzwinkel $\Phi_T$ der Totalreflexion is gegeben durch die Gleichung sin $\Phi_T$ = 1/n, wobei n die Brechzahl des optisch transparenten Materials ist, aus dem die Stufen des Gitters sind, wenn die reflektierende Fläche an Luft grenzt.

Das Gitter kann dabei z.B. in bekannter Technik als Abdruck in einem Epoxydharz-Film auf einem Glasblock hergestellt werden. Das Gitter kann aber auch zusammen mit dem optisch transparenten Körper als Abguß aus einem Kunststoff hergestellt werden. Dafür eignet sich z.B. CR 39. Ebenso ist die Herstellung der Gitterteilung als geätzte Struktur direkt auf einem geeigneten Träger aus optisch transparentem Material möglich, wie dies z.B. in der DE-AS 26 57 090 beschrieben ist. Als Träger eignet sich in diesem Fall z.B. Quarzglas. Weitere vorteilhafte Ausgestaltungen der Erfindung gehen aus den Unteransprüchen und der Beschreibung zu den Figuren hervor.

Ein besonderer Vorteil der Erfindung liegt darin, daß die übliche Metallverspiegelung gespart wird. Es ist lediglich dafür zu sorgen, daß die Rückseite des Gitters nicht verschmutzen kann, was sich durch eine mechanische Abdeckung in einem geringen Abstand leicht erreichen läßt.

Die Erfindung wird im folgenden anhand der Figuren 1 bis 4 näher erläutert. Dabei zeigen

Fig. 1 eine Skizze zur Verdeutlichung der Verwendung eines Reflexionsgitters unter Ausnutzung der Totalreflexion,

Fig. 2 ein Ausführungsbeispiel mit einem Abdruck des Gitters,

Fig. 3 ein Ausführungsbeispiel mit einem Abguß des Gitters und

Fig. 4 ein Ausführungsbeispiel mit einem geätzten Gitter.

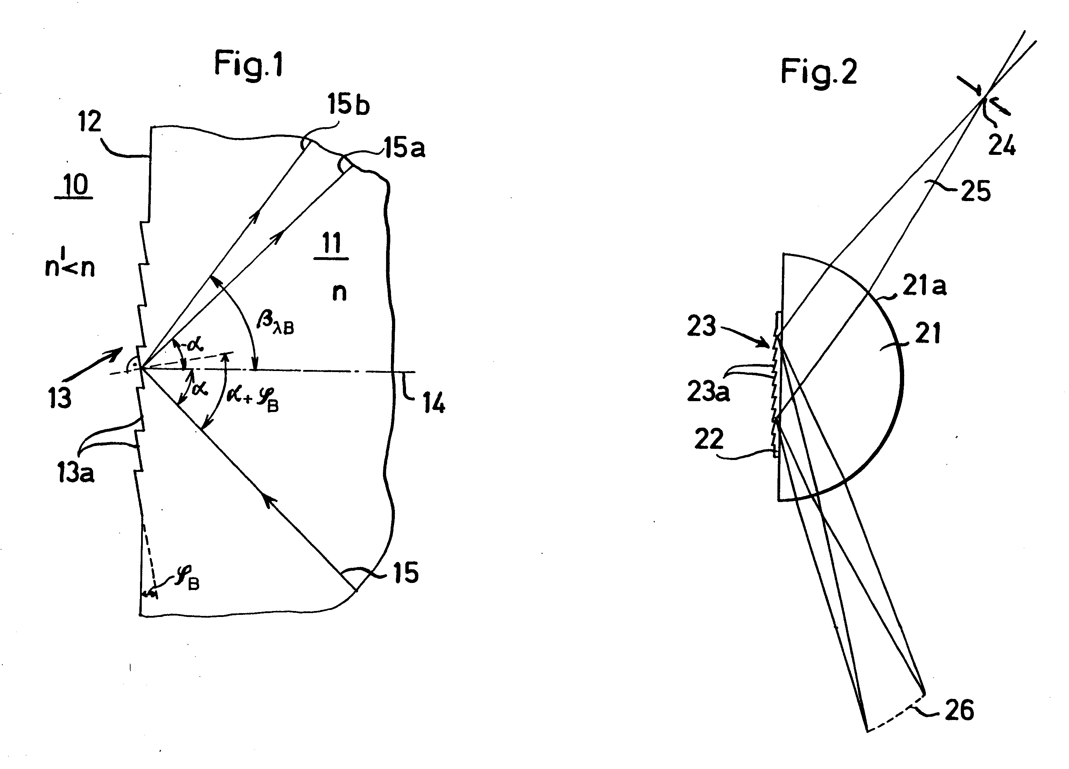

In Figur 1 ist mit 11 ein optisch transparentes Material bezeichnet, welches die Brechzahl n hat. Die reflektierende Fläche 12 mit der Gitterstruktur 13 und dem Blazewinkel $\phi_B$ grenzt an die Luft 10, deren Brechzahl n' kleiner als n und gleich 1 ist. An dem Gitter 13 tritt daher Totalreflexion auf, wenn der Grenzwinkel $\Phi_T$ unterschritten wird, welcher aus der Gleichung

$$\sin \Phi_T = 1/n$$

folgt.

Ein zur Normalen 14 unter dem Winkel $\alpha$ einfallender Lichtstrahl 15 wird in der sog. nullten Ordnung als "weißer" Lichtstrahl 15a unter dem Winkel $-\alpha$ reflektiert. Die Wellenlänge $\lambda_B$, für die z.B. in der 1. Ordnung die Blaze-Wirkung gefordert ist, erscheint unter dem Winkel

$$\beta\lambda_B = -(\alpha + 2\phi_B)$$

als Strahl 15b.

Ein zur Normalen 14 unter dem Winkel $\alpha$ einfallender Lichtstrahl 15 fällt unter dem Winkel

$$\Phi = \alpha + \phi_B$$

auf die Flanken 13a der Gitterfurchen. Wenn dieser Winkel $\Phi$ gleich oder größer ist als der Grenzwinkel der Totalreflexion $\Phi_T$, der durch die Gleichung

$$\sin \Phi_T = 1/n$$

gegeben ist, dann tritt Totalreflexion ein. In diesem Fall gilt für das Reflexionsvermögen

$$R_T = 1$$

(siehe z.B. Born, Optik, S. 41, Springer 1972). Der Wirkungsgrad eines in Totalreflexion betriebenen Reflexionsgitters hängt daher nur noch von der spektralen Durchlässigkeit des optisch transparenten Materials 11 und von der Abschattung durch das Furchenprofil ab. Die spektrale Durchlässigkeit kann durch Wahl eines geeigneten Materials immer günstig gewählt werden, so daß sich Reflexionsbeugungsgitter durch die beschriebene Ausnutzung der Totalreflexion mit einem sehr hohen Wirkungsgrad herstellen lassen.

In Figur 2 ist ein Ausführungsbeispiel dargestellt, bei dem ein Gitter 23 in bekannter Technik auf eine Halbkugel 21 kopiert ist. Die Halbkugel 21 ist aus Glas, z.B. aus ZKN 7. Zwischen dieser Halbkugel und den Gitterfurchen 23a ist durch den Kopiervorgang eine dünne Schicht 22 aus Epoxydharz. Für den Grenzwinkel $\Phi_T$, ab dem Totalreflexion eintritt, ist diese Epoxydharz-Schicht maßgebend und damit ihre Brechzahl. Diese ist größer als die des Glases ZKN 7.

Die Halbkugel 21 hat abbildende Eigenschaften: das vom Eintrittsspalt 24 kommende Lichtbündel 25 fällt nach dem ersten Durchgang durch die Kugelfläche 21a als Parallelbündel auf das Gitter 23 und wird nach der Beugung am Gitter beim zweiten Durchgang durch die Kugelfläche 21a wieder fokussiert, so daß auf der Fläche 26 ein Spektrum entsteht.

Die beschriebene Anordnung kann z.B. mit folgenden Daten ausgeführt werden:

Halbkugel aus ZKN 7; $n_d = 1,508$; $\Phi_T = 41,54°$

Kopiermaterial Epoxydharz; $n_d = 1,614$; $\Phi_T = 38,29°$

Halbkugelradius r = 29 mm

Gitter mit 305 L/mm; Blazewinkel $\phi_B = 3,9257°$

Einfallswinkel $\alpha = -55°$

Blaze-Wellenlänge in 1. Ordnung $\lambda_B = 382$ nm

Spektrenlängen von 405 bis 706 mm = 15 mm

Die beschriebene Ausführungsform zeigt auch, wie man einen vermeintlichen Nachteil des erfindungsgemäßen Reflexionsbeugungsgitters in einen Vorteil umkehren kann. Durch den vor dem Gitter angeordneten transparenten Körper würden, wenn man das Gitter so verwendet wie in der US-PS 4 475 792 angegeben, Reflexionsverluste beim Eintritt in den transparenten Körper enstehen. Bildet man jedoch -wie in Figure 2 -den transparenten Körper zugleich als abbildendes Element aus, so spart man das sonst notwendige abbildende Element mit zwei Grenzflächen (oder einer Reflexionsfläche). Insgesamt werden also die Reflexionsverluste gegenüber herkömmlichen Anordnungen durch abbildende Flächen des transparenten Körpers auch vor und nach dem Gitter verkleinert.

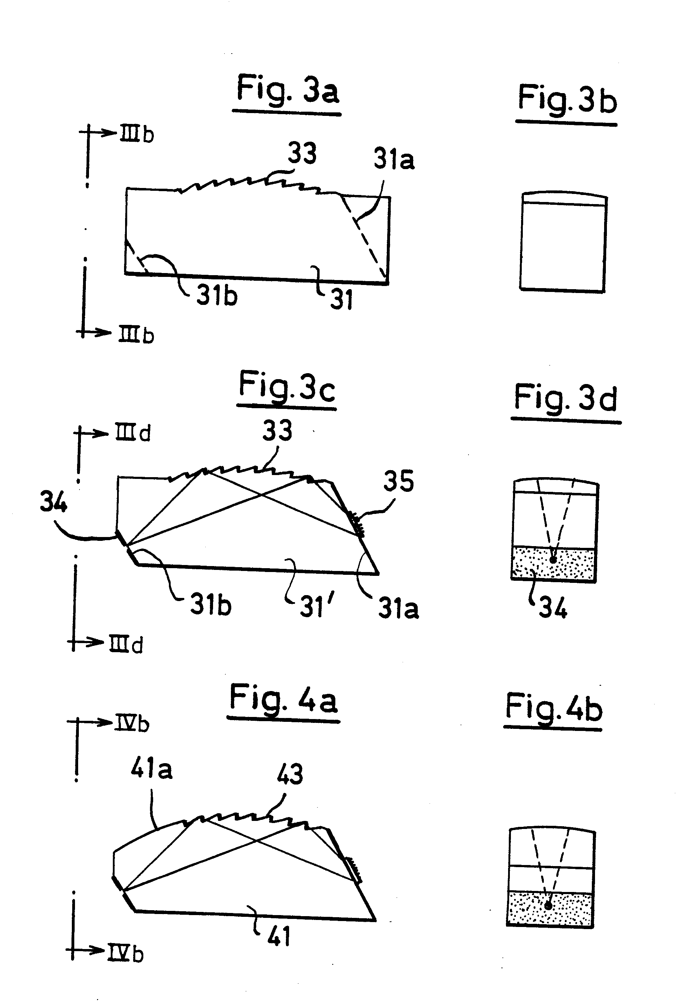

In Figur 3 ist ein anderes Ausführungsbeispiel dargestellt, bei dem ein Konkavgitter 33 zusammen mit dem transparenten Körper 31 als Abguß in bekannter Technik hergestellt worden ist. Als Material kann z.B. CR 39 verwendet werden. Die Abgußtechnik verlangt eine Form des transparenten Körpers 31, die häufig nicht der späteren Verwendung entspricht. In dem dargestellten Beispiel werden daher die Flächen 31a und 31b durch nachträgliche Bearbeitung hergestellt, so daß die in den Figuren 3c und d mit 31' bezeichnete Form des transparenten Körpers entsteht. Auf der Fläche 31b ist ein Eintrittsspalt 34 und auf die Fläche 31a eine Diodenzeile 35 aufgekittet und dadurch ein äußerst kompaktes und kleines Spektrometer hergestellt worden.

Das gleiche Spektrometer ist in den Figuren 4a und b dargestellt, wobei lediglich die äußere Form, bedingt durch einen anderen Herstellungsprozeß, geringfügig anders ist. In diesem Fall ist der transparente Körper 41 durch konventionelle Bearbeitung aus Glas, z.B. aus Quarzglas, hergestellt worden und das Gitter 43 ist anschließend in die konkave Oberfläche 41a durch Ionenätzung in bekannter Technik eingearbeitet worden.

In allen Ausführungsbeispielen können natürlich an Stelle der Eintrittsspalte Lichtleitfasern angeordnet bzw. angekittet werden. Ebenso können in der Spektrenebene 26 oder an Stelle der Diodenzeilen Lichtleitfasern zur Weiterleitung der Strahlung von bestimmten Wellenlängenbereichen verwendet werden.

## Ansprüche

1. Reflexionsbeugungsgitter, bei dem die Gitterteilung mit ihrer reflektierenden Seite auf eine Fläche eines optisch transparenten Körpers aufgebracht ist, dadurch gekennzeichnet, daß der Winkel ($\alpha + \phi_B$), unter dem das Licht auf die Flanken - (13a) der Gitterfurchen auftrifft, größer ist als der Grenzwinkel der Totalreflexion.

2. Reflexionsbeugungsgitter nach Anspruch 1, dadurch gekennzeichnet, daß die Gitterteilung (23) als Abdruck in einem dünnen Epoxydharz-Film - (22) auf einem Glasblock (21) hergestellt ist.

3. Reflexionsbeugungsgitter nach Anspruch 1, dadurch gekennzeichnet, daß die Gitterteilung (33) als Abguß (31) aus einem optischen transparentem Kunststoff hergestellt ist.

4. Reflexionsbeugungsgitter nach Anspruch 3, dadurch gekennzeichnet, daß der optisch transparente Kunststoff CR 39 ist.

5. Reflexionsbeugungsgitter nach Anspruch 1, dadurch gekennzeichnet, daß die Gitterteilung (43) als geätzte Struktur auf einem transparenten Träger (41) hergestellt ist.

6. Reflexionsbeugungsgitter nach Anspruch 5, dadurch gekennzeichnet, daß der optisch transparente Träger (41) Quarzglas ist.

7. Reflexionsbeugungsgitter nach Ansprüche 1 bis 6, dadurch gekennzeichnet, daß der optische transparente Körper (21) für das einfallende Strahlenbündel mit einer Oberfläche (21a) ausgeführt ist, welche eine optische Wirkung hat.

8. Reflexionsbeugungsgitter nach einem der Ansprüche 1 bis 7, dadurch gekennzeichnet, daß der optisch transparente Körper (21) für die reflektierten Strahlenbündel mit einer Oberfläche (21a) ausgeführt ist, welche eine optische Wirkung hat.

9. Reflexionsbeugungsgitter nach einem der Ansprüche 1 bis 8, dadurch gekennzeichnet, daß für die Zu-und Abführung der Strahlung Lichtleitfasern vorgesehen sind.

10. Reflexionsbeugungsgitter nach einem der Ansprüche 1 bis 6, dadurch gekennzeichnet, daß ein Eintrittsspalt (34) und/oder ein Empfänger (35) direkt auf der Oberfläche des transparenten Körpers (31) befestigt sind.

Fig.1

Fig.2

0 212 438

Fig. 3a

Fig.3b

Fig.3c

Fig.3d

Fig.4a

Fig.4b